# EUROPEAN PATENT APPLICATION

(11) **EP 2 816 479 A1**
(43) Date of publication of application: **24.12.2014**
(21) Application number: 13748510.8
(22) Date of filing: 15.02.2013
(51) Int. Cl.: G06F 9/50

(54) **INFORMATION PROCESSING DEVICE**

(30) Priority: 16.02.2012 JP 2012032173
(71) Applicant: Sharp Kabushiki Kaisha, Osaka-shi, Osaka 545-8522 (JP)
(72) Inventor: ISHIKAWA, Hirokazu, Osaka-shi, Osaka 545-8522 (JP); OHTSUKA, Kiyofumi, Osaka-shi, Osaka 545-8522 (JP); YOKOGAWA, Megumi, Osaka-shi, Osaka 545-8522 (JP); SATOH, Shinya, Osaka-shi, Osaka 545-8522 (JP); YABUKI, Yuhichi, Osaka-shi, Osaka 545-8522 (JP); NAGASAWA, Tadao, Osaka-shi, Osaka 545-8522 (JP)
(74) Representative: Müller - Hoffmann & Partner
(86) International application number: PCT/JP2013/053730
(87) International publication number: WO 2013/122217

(57) **Abstract**

In a case where a procedure in which a process generation step of allocating a resource necessary for application execution is carried out and then an application execution screen is displayed in a display panel is an application execution procedure, an application execution processing section (102) of the present invention carries out the process generation step in the background during application execution in the foreground.

## Description

### Technical Field

The present invention relates to an information processing device capable of executing a plurality of applications.

### Background Art

An information processing device capable of executing a plurality of applications is exemplified by a portable information terminal such as a smartphone. In order to quickly change applications, such a portable information terminal employs a method for executing an application in the foreground while causing another application to be active in the background.

However, though such a method can reduce time of changing applications, i.e., a time period between an end of a currently executed application and an execution of a subsequent application, the method causes a problem such that a larger amount of memory is used in a case where the subsequent application is active in the background.

In order to address the problem, Patent Literature 1 discloses a technique for activating an application at a high speed. According to the technique, in order to shorten an application activation time while reducing an amount of use of memory, respective degrees of priority of applications are calculated based on (i) the number of times of activation of the applications and (ii) coefficients of frequency of use, and an application having a high priority is active in the background. Then, merely by changing an active state of that application when the application is activated by a user, the application can be activated at a high speed.

According to Patent Literature 1, in a case where a memory capacity is insufficient for a normal application to be activated, memory for a resident application is released in ascending order of respective degrees of priority of applications so as to prevent a case where the normal application cannot be activated due to insufficient memory caused by the presence of the resident application.

### Citation List

### [Patent Literature]

[Patent Literature 1]
Japanese Patent Application Publication Tokukai, No. 2008-97425 (Publication Date: April 24, 2008)

### Summary of Invention

### Technical Problem

However, the technique disclosed in Patent Literature 1 has the following problem.
(a) Though a change to an application which is active in the background can be carried out quickly, a change to an application which is not active in the background takes time. This may cause the user to sense that the applications are changed at a slower speed. For example, in a case where an application which is active in the foreground is changed to an application which is not active in the background, the user senses that a speed at which the application which is active in the foreground is changed to the application which is not active in the background and which is activated slowly is slower than a speed at which the application which is active in the foreground is changed to the application which is not active in the background and which is activated quickly.
(b) According to the technique for determining a priority order in accordance with the number of times of activation of the applications and frequency of use, the applications include an application that is activated in no time. This may not bring about a significant improvement in speed at which the applications are changed. In this case, the user may sense that a speed at which the applications are changed is unchanged.
(c) The technique does not consider a priority order of a CPU procedure to be carried out when an application is activated in the background. This may affect an application which is being executed in the foreground.

The present invention has been made in view of the above problems, and an object of the present invention is to provide an information processing device which, by activating all applications in a shorter time, (i) allows a user to sense that applications are changed at a higher speed and (ii) has no influence on an application which is being executed in the foreground.

### Solution to Problem

An information processing device in accordance with an aspect of the present invention includes: a display panel for displaying a screen showing an application which is being executed; and an application execution processing section for carrying out an execution procedure with respect to an application which is selected by a user, in a case where a procedure in which a process generation step of allocating a resource necessary for application execution is carried out and then an application execution screen is displayed in the display panel is an application execution procedure, the application execution processing section carrying out the process generation step in the background during application execution in the foreground.

A method in accordance with an aspect of the present invention for carrying out application execution control with respect to an information processing device including: a display panel for displaying a screen showing an application which is being executed; and an application execution processing section for carrying out an execution procedure with respect to an application which is selected by a user, the method includes an application execution control step of: in a case where a procedure in which a process generation step of allocating a resource necessary for application execution is carried out and then an application execution screen is displayed in the display panel is an application execution procedure, carrying out the process generation step in the background during application execution in the foreground.

### Advantageous Effects of Invention

An information processing device in accordance the present invention includes: a display panel for displaying a screen showing an application which is being executed; and an application execution processing section for carrying out an execution procedure with respect to an application which is selected by a user, in a case where a procedure in which a process generation step of allocating a resource necessary for application execution is carried out and then an application execution screen is displayed in the display panel is an application execution procedure, the application execution processing section carrying out the process generation step in the background during application execution in the foreground. The configuration brings about effects of (i) allowing a user to sense that applications are changed at a higher speed and (ii) having no influence on an application which is being executed in the foreground.

### Brief Description of Drawings

Fig. 1 is a block diagram schematically illustrating an example of an information processing device of the present invention.
Fig. 2 is a view illustrating a system configuration of a smartphone which includes the information processing device illustrated in Fig. 1.
Fig. 3 is a view for explaining definitions of an application execution procedure.
Fig. 4 is a block diagram schematically illustrating how applications to be activated are changed.
Fig. 5 is a flowchart showing a flow of a process generation step which is executed by the information processing device illustrated in Fig. 1.

### Description of Embodiments

The following description discusses an embodiment of the present invention. Note that the present embodiment discusses an example in which an information processing device of the present invention is provided in a smartphone which is a portable information terminal.

### <System Configuration of Smartphone>

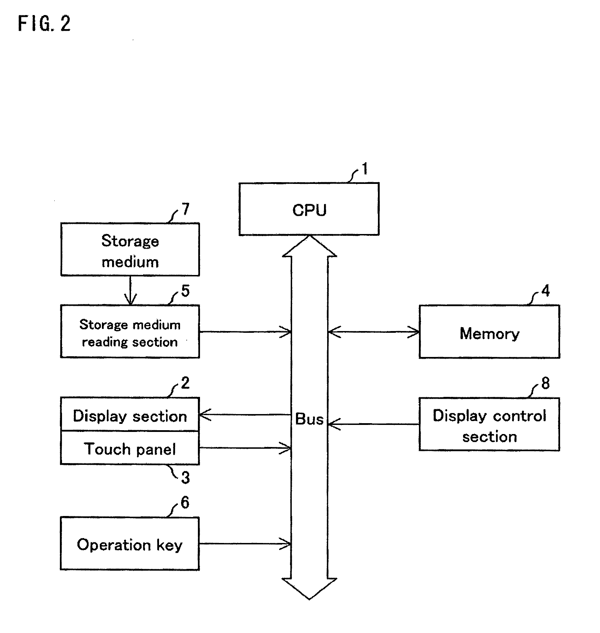

A smartphone of the present embodiment includes a display section (display panel) 2, a touch panel 3, a memory 4, a storage medium reading section 5 for reading a storage medium 7, an operation key 6, and a display control section 8, which are connected via a CPU 1 and a bus that constitute an information processing device (see Fig. 2).

The display section 2 is constituted by a flat display panel such as a liquid crystal panel or an organic EL panel. The display section 2 is configured to display information (an image, an application, etc.) processed by the smartphone of the present embodiment.

Assume here that the display section 2 displays, while the smartphone of the present embodiment is active, application activation icons corresponding to respective various applications. In a case where the number of icons is not less than the number of icons that can be displayed in one page of a display screen, the icons are displayed in a plurality of pages of the display screen, and a user searches for a desired icon by scrolling the display screen.

The touch panel 3 is provided so as to cover the display screen of the display section 2 and functions as a user interface that receives a user's touch operation such as an input of a character string, a selection of such an icon as described above, or scrolling of the display screen. The touch panel can be driven by any method, and is exemplified by an electrical capacitance touch panel or a resistive touch panel. A method for driving the touch panel is not particularly limited.

The memory 4 is constituted by (i) a RAM that functions as a working area for a program such as an application to be executed by the CPU 1 and (ii) a ROM that stores a program(s) necessary to drive an application program and a smartphone.

The storage medium reading section 5 is a device for reading data stored in the storage medium 7 which is an external memory. That is, if the storage medium 7 is an SD memory card, the storage medium reading section 5 is an SD card reader.

The operation key 6 is input means which is constituted by physical keys and functions by being pressed by the user. That is, according to the smartphone of the present embodiment, not only the touch panel 3 but also the operation key 6 functions as a user interface.

The display control section 8 is control means for controlling a display of the display section 2. Specifically, the display control section 8 causes a screen displayed in the display section 2 to be scrolled and causes the display section 2 to display a screen showing that an application has been activated. Note here that (i) the control carried out by the display control section 8 for scrolling the screen displayed in the display section 2 and (ii) the control carried out by the display control section 8 for displaying the screen showing that an application has been activated are carried out by a user's touch operations carried out with respect to the touch panel 3. The controls are specifically described later.

### <Description of Control Section>

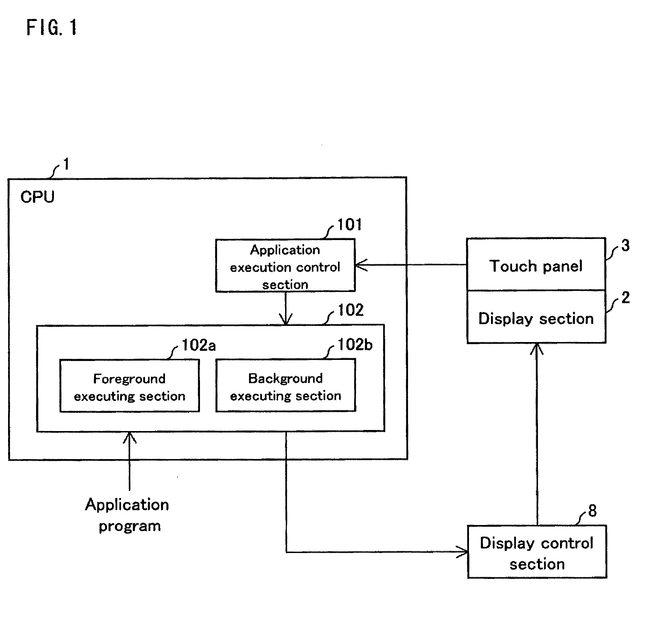

The CPU 1 is an information processing device including an application execution control section 101 and an application execution processing section 102 (see Fig. 1).

When the application execution control section 101 receives an application selection signal from the touch panel 3, the application execution control section 101 instructs the application execution processing section 102 to read a program for the received application selection signal (hereinafter referred to as an application program) from a storage section such as the memory 4 (see Fig. 2) or the storage medium 7 (see Fig. 2) so as to execute the application program.

Note that the application selection signal is, for example, a signal which is generated in a case where an application selection icon displayed at a position on the touch panel 3 at which position the user touches the touch panel 3 is selected (clicked) by the user. An application can also be selected not only by the touch panel 3 but also by the operation key 6.

The application execution processing section 102 is constituted by a foreground execution section 102a for executing an application in the foreground and a background execution section 102b for executing an application in the background.

The background execution section 102b executes an application in the background while an application is being executed by the foreground execution section 102a.

The application execution processing section 102 is instructed by the application execution control section 101 to read out a program for a desired application from the storage section so as to execute the desired application. In this case, if no application is being executed in the foreground, the application execution processing section 102 causes the foreground execution section 102a to execute the desired application. Meanwhile, if an application is being executed in the foreground, the application execution processing section 102 causes the background execution section 102b to execute the desired application.

A result of the execution by the application execution processing section 102 is appropriately sent to the display control section 8, so that the result is displayed in the display section 2.

### <Application Execution Procedure>

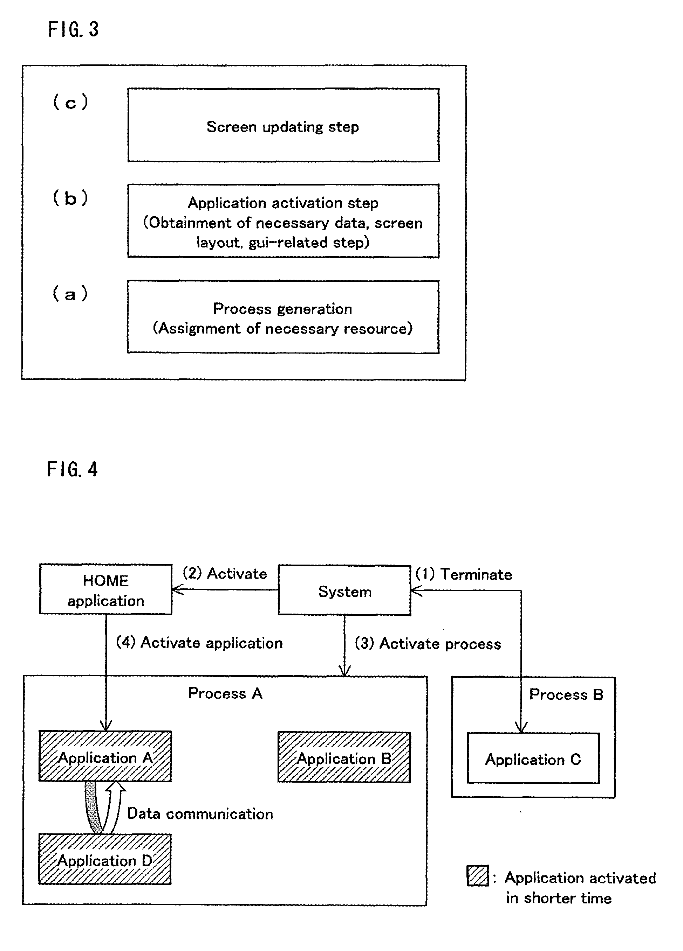

Fig. 3 is a view schematically illustrating a structure of a general application execution procedure.

That is, the application execution procedure includes the following three steps, into which the application execution procedure is roughly divided: (i) a process generation step (see (a) in Fig. 3), (ii) an application activation step (see (b) of Fig. 3), and (iii) a screen updating step (see (c) of Fig. 3).

According to the process generation step shown in (a) of Fig. 3, a necessary resource is allocated as described earlier.

According to the application activation step shown in (b) of Fig. 3, operations such as obtainment of data necessary for a display of an application screen, determination of a screen layout, and a GUI (Graphical User Interface)-related step are carried out.

According to the screen updating step shown in (c) of Fig. 3, a step of transferring a screen image to the display section 2 is carried out.

The above three steps (i) through (iii) are carried out by the application execution processing section 102.

A "process" generated in the process generation step (described earlier) refers to a unit in which an application program is executed in an operating system. The process is constituted by a resource such as an image of an execution command code, a memory, a state of a processor, or a security property.

According to the operating system, in which a plurality of processes are executed in parallel, the plurality of processes are separated by allocating necessary resources to the respective plurality of processes. This prevents occurrence of a problem caused by interference among the plurality of processes.

For example, in a case where activation of a desired application is selected by, for example, an operation in which the user touches an application icon displayed on the touch panel 3, the process generation step is carried out first, the application activation step is then carried out, and the screen updating step is finally carried out, so that the application screen is displayed in the display section 2.

The present embodiment will discuss, as the application execution procedure, a procedure in which the process generation step of allocating a resource necessary for application execution is carried out and then an application execution screen is displayed in the display section 2.

"Activation of a process" herein means that the step of allocating a necessary resource to the process (process generation) is carried out. In a case where the process generation is carried out at or before a timing at which an operation of activating an application is carried out, the user can sense that the application is displayed in a screen at a higher speed after the user has touched an icon of the application.

That is, the application execution processing section 102 causes the background execution section 102b to carry out the process generation step in the background while the foreground executing section 102a is executing an application in the foreground.

According to the configuration, in a case where a procedure in which the process generation step of allocating a resource necessary for application execution is carried out and then an application execution screen is displayed in the display panel is the application execution procedure, the application execution processing section 102 is carrying out the process generation step in the background during application execution in the foreground. Accordingly, a time period in which the application which is being executed in the foreground is terminated, another application is executed, and then an application screen is displayed in the display panel can be reduced by time required to carry out the process generation step.

This allows a reduction in time required for activation of a subsequent application in a case where a plurality of applications are changed. This allows the user to sense that the application execution screen is displayed at a higher speed. That is, the configuration allows the user to sense that applications are changed at a higher speed.

Furthermore, since the process generation step of allocating a resource necessary for application execution is merely carried out in the background, a less great load is placed on a CPU. Therefore, the application which is being executed in the foreground is hardly likely to be adversely affected.

Therefore, the configuration brings about effects of (i) allowing a user to sense that applications are changed at a higher speed and (ii) hardly adversely affecting an application which is being executed in the foreground.

It is preferable that a process to be generated in the process generation step is shared by at least two types of applications which are associated with each other.

According to the configuration, since a process to be generated in the process generation step is shared by at least two types of applications which are associated with each other, in a case where one of the applications which one shares the process with the other(s) of the applications is executed, it is possible to reduce, by time required to carry out the process generation step, time required for activation of the other(s) of the applications which other(s) share(s) the process.

This also allows the user to sense a high speed at which an application is activated.

Furthermore, since a resource allocated to one process can be shared by a plurality of application programs, a greater effect can be obtained by selecting and executing in advance a process that affects a plurality of applications.

### <Specific Example>

Fig. 4 is a view for explaining an outline of an operation in a case where a resource allocated to one process is shared by a plurality of application programs.

The specific example will discuss an example in which four applications (applications A, B, C, and D) are used as a plurality of applications and two types of processes (processes A and B) are used as processes.

First, as illustrated in Fig. 4, a notification that the process B has been terminated is sent to a system from the application C using the process B ((1) a termination step).

Then, when the system receives the notification from the application C, the system activates a HOME application (an application for displaying a plurality of application icons for selecting corresponding applications) (carries out (2) an activation step), and activates the process A (carries out (3) a process activation step).

Assume here that the process A is active in the background while the HOME application is active. The process A is shared by the applications A, B, and D.

Subsequently, when the user selects an icon from the HOME application, an application corresponding to the selected icon is activated ((4) an application activation step). The specific example assumes that the application A using the process A is activated.

In this case, the application execution procedure is carried out with respect to the application A while the process A is already active. This allows a reduction in time of activating the process A.

Further, the process A which is used for the application A and is active in the foreground is also used for the application B. This also makes it possible to quickly change the application A to the application B.

Furthermore, also in a case where the application A which is being executed in the foreground uses data of the application D using the same process A (i.e., establishes data communication), the application D is activated quickly. This also allows data to be used quickly.

For example, according to an Android (Registered Trademark) terminal using Android (Registered Trademark) as an operating system, a necessary resource is allocated to a process (here, the process A) for causing programs for a telephone directory application (here, the application A) and an incoming/outgoing call log application (here, the application B) to operate at a timing at which a HOME screen is displayed in the foreground. That is, the process generation step is carried out.

In a case where an icon for the telephone directory application or the incoming/ outgoing call log application is touched in this state, the process generation step does not need to be carried out. This allows an application screen to be displayed in a shorter time. That is, time required to carry out the process generation step is reduced.

Meanwhile, assume, for example, that a mail application (here, the application A) is activated. In this case, in order to display a name of a mail address of a receiver, it is necessary to obtain name data by executing a telephone directory application (here, the application D). If a necessary resource has already been allocated to a process for the telephone directory application, it is possible to reduce time required to obtain the name data. This consequently allows the mail application to be activated more quickly.

### <Process Activation Step>

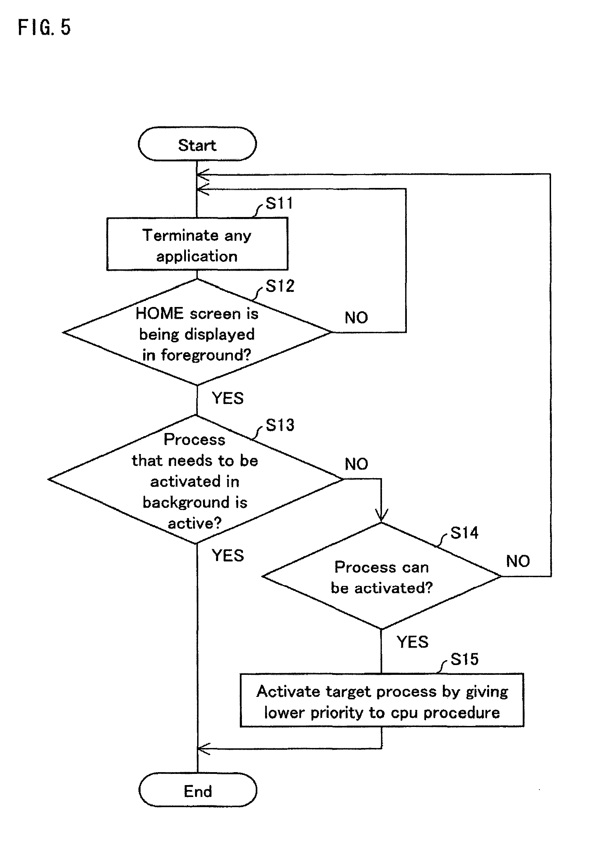

Fig. 5 is a flowchart showing a flow of the process activation step. Note that the process activation step is carried out by the application execution processing section 102.

First, when any application is terminated (step S11), it is determined whether or not a HOME screen is being displayed in the foreground (step S12). That is, the process activation step waits to proceed to a subsequent step until a HOME application is active in the foreground when the any application is terminated.

Subsequently, when it is determined at step S12 that the HOME screen is being displayed in the foreground, the application execution processing section 102 determines whether or not a process that needs to be activated in the background is active (step S13). For example, the application execution processing section 102 determines at this step whether or not the process A or the process B as shown in Fig. 4 is active.

Then, when it is determined at step S13 that the process that needs to be activated in the background is active, the application execution processing section 102 terminates the process generation step. When it is determined at step S13 that the process that needs to be activated in the background is not active, the application execution processing section 102 proceeds to step S14, at which the application execution processing section 102 determines whether or not a process can be activated. At step S14, the application execution processing section 102 determines whether or not there is any resource to be allocated to a new process which is to be activated.

When it is determined at step S14 that a process cannot be activated, the application execution processing section 102 returns to the step S11 and repeats a resource generation step again. When it is determined that a process can be activated, the application execution processing section 102 proceeds to step S15, at which a target process is activated by giving a lower priority to a CPU procedure. Then, the process generation step is terminated.

That is, at step 15, while the HOME application is already active in the foreground, in order not to affect the HOME application, a process is activated by giving a lower priority to the procedure to be carried out by the CPU.

Specifically, the application execution processing section 102 prioritizes control procedures which are necessary for execution of an application, and controls execution of each application by giving a lower priority to a control procedure which is necessary for the process generation step than to a control procedure which is necessary for processing of an application which is being executed in the foreground.

This makes it possible to activate a process in the background without affecting performance of an application which is operating in the foreground.

The present embodiment has discussed a case where the process generation step is carried out while the HOME screen is being displayed in the display section 2, that is, while the HOME application is being executed in the foreground. However, the present invention is not limited to this. The process generation step can also be carried out at a timing at which an execution screen for an application which is being executed in the foreground is displayed in the display section 2.

### <Scope of the Present Invention>

The present embodiment has discussed an example in which the information processing device of the present invention is provided in a smartphone. This is because a technique for quickly changing applications is effective in a device which is exemplified by a portable device such as a smartphone and is incapable of causing many applications to be active in advance because of insufficient resources such as memory.

Meanwhile, the object of the present invention is to allow a user to sense that applications are changed at a higher speed. Therefore, the present invention is applicable not only to a portable device such as a smartphone but also to a device to which sufficient resources are allocated such as a laptop personal computer or a desktop personal computer.

Even a device to which sufficient resources are allocated and which allows a plurality of applications to be active simultaneously makes it impossible to activate all the applications simultaneously. As such, the technique of the present invention is still effective in carrying out the process generation step in the background in advance and changing and executing applications quickly when necessary.

### <Program and Recording Medium>

The application execution processing section 102 of an information processing device included in the smartphone may be realized by way of hardware or software as executed by a CPU (Central Processing Unit).

The application execution processing section 102 of the information processing device includes; a CPU such as an MPU that executes instructions of a program realizing the foregoing functions; and memory devices including a ROM (Read Only Memory) storing the program, a RAM (Random Access Memory) that develops the program in executable form, and a storage device (a recording medium) such as a memory that stores the program and various kinds of data.

The object of the present invention can be achieved by causing an application execution processing program for realizing the application execution processing section 102 to make a recording medium recording program codes (an executable program, an intermediate code program, and a source program) of the program available to the application execution processing section 102 of the information processing device, and by causing the application execution processing section 102 to retrieve and execute the program codes recorded in the recording medium, whether or not the application execution processing program is held by a program memory in a fixed manner.

The recording medium is not limited to a recording medium of a specific structure or type. The recording medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM (Registered Trademark)/flash ROM.

The object of the present invention can also be achieved by arranging the application execution processing section 102 of the information processing device to be connectable to a communications network. In this case, the program codes are made available over the communications network. Such a communications network is not limited to a communications network of a specific structure or type provided that the communications network can make the program codes available to the application execution processing section 102 of the information processing device. The communications network may be, for example, the Internet, an intranet, extranet, LAN, ISDN, VAN, CATV communications network, virtual dedicated network (Virtual Private Network), telephone line network, mobile communications network, or satellite communications network.

A transfer medium which makes up the communications network is not limited to a transfer medium of a specific structure or type provided that the transfer medium can transfer the program codes. The transfer medium may be, for example, wired line, such as IEEE 1394, USB, electric power line, cable TV line, telephone line, or ADSL (Asymmetric Digital Subscriber Line) line; or wireless, such as infrared radiation (IrDA, remote control), Bluetooth (Registered Trademark), 802.11 wireless, HDR, mobile telephone network, satellite line, or terrestrial digital network. The present invention encompasses a computer data signal in which the program codes are embodied electronically and which is embedded in a carrier wave.

The present invention is not limited to the descriptions of the embodiment, but may be altered within the scope of the claims. An embodiment derived from a proper combination of technical means disclosed in different embodiments is encompassed in the technical scope of the invention.

### [Main Points of the Invention]

As has been described, an information processing device in accordance with a first aspect of the present invention includes: a display panel for displaying a screen showing an application which is being executed; and an application execution processing section for carrying out an execution procedure with respect to an application which is selected by a user, in a case where a procedure in which a process generation step of allocating a resource necessary for application execution is carried out and then an application execution screen is displayed in the display panel is an application execution procedure, the application execution processing section carrying out the process generation step in the background during application execution in the foreground.

According to the configuration, in a case where a procedure in which the process generation step of allocating a resource necessary for application execution is carried out and then an application execution screen is displayed in the display panel is the application execution procedure, the application execution processing section is carrying out the process generation step in the background during application execution in the foreground. Accordingly, a time period in which the application which is being executed in the foreground is terminated, another application is executed, and then an application screen is displayed in the display panel can be reduced by time required to carry out the process generation step.

This allows a reduction in time required for activation of a subsequent application in a case where a plurality of applications are changed. This allows the user to sense that the application execution screen is displayed at a higher speed. That is, the configuration allows the user to sense that applications are changed at a higher speed.

Furthermore, since the process generation step of allocating a resource necessary for application execution is merely carried out in the background, a less great load is placed on a CPU. Therefore, the application which is being executed in the foreground is hardly likely to be adversely affected.

Therefore, the configuration of the information processing device brings about effects of (i) allowing a user to sense that applications are changed at a higher speed and (ii) hardly adversely affecting an application which is being executed in the foreground.

In a second aspect of the information processing device, the information processing device in accordance with the first aspect of the present invention is preferably configured such that a process to be generated in the process generation step is shared by at least two types of applications which are associated with each other.

According to the configuration, since a process to be generated in the process generation step is shared by at least two types of applications which are associated with each other, in a case where one of the applications which one shares the process with the other(s) of the applications is executed, it is possible to reduce, by time required to carry out the process generation step, time required for activation of the other(s) of the applications which other(s) share(s) the process.

This also allows the user to sense a high speed at which an application is activated.

In a third aspect of the information processing device, the information processing device in accordance with the first or second aspect of the present invention is preferably configured s.uch that the application execution section processing section executes the process generation step at a timing at which a screen showing an application which is executed in the foreground is displayed in the display panel. This is because the application execution processing section occupies, in a shorter time, a resource such as a memory to be used for a process that is closely associated with a specific application.

According to the configuration, the following effect is brought about by executing the process generation step at a timing at which a screen showing an application which is executed in the foreground is displayed in the display panel.

For example, as for processes which are closely linked to each other such as a process for a mail application and a process for a telephone directory application (e.g., reference to an address book after drawing up a mail), activation of one of the processes at a timing at which the other of the processes is activated allows a shorter time of occupying a memory.

Further, in a case where an activation shortcut placed on a HOME screen, a use case with which the user activates an application is limited. As such, activation of a process which is associated with an application that can be activated from the shortcut when a HOME application is activated makes it possible to reduce an application activation time.

In a fourth aspect of the information processing device, the information processing device in accordance with any one of the first through third aspects of the present invention is preferably arranged to further include: an application execution control section for carrying out application execution control with respect to the application execution processing section, the application execution control section prioritizing control procedures which are necessary for application execution, and the application execution control section carrying out execution control with respect to each application by giving a lower priority to a control procedure which is necessary for the process generation step than to a control procedure which is necessary for processing of an application which is being executed in the foreground.

The configuration makes it possible to activate a process in the background while having no influence on performance of an application which is operating in the foreground.

A method in accordance with a fifth aspect of the present invention for carrying out application execution control with respect to an information processing device including: a display panel for displaying a screen showing an application which is being executed; and an application execution processing section for carrying out an execution procedure with respect to an application which is selected by a user, the method includes an application execution control step of: in a case where a procedure in which a process generation step of allocating a resource necessary for application execution is carried out and then an application execution screen is displayed in the display panel is an application execution procedure, carrying out the process generation step in the background during application execution in the foreground.

According to the configuration, in a case where a procedure in which the process generation step of allocating a resource necessary for application execution is carried out and then an application execution screen is displayed in the display panel is the application execution procedure, the process generation step is carried out in the background during application execution in the foreground. Accordingly, a time period in which the application which is being executed in the foreground is terminated, another application is executed, and then an application screen is displayed in the display panel can be reduced by time required to carry out the process generation step.

This allows a reduction in time required for activation of a subsequent application in a case where a plurality of applications are changed. This allows the user to sense that the application execution screen is displayed at a higher speed. That is, the configuration allows the user to sense that applications are changed at a higher speed.

Furthermore, since the process generation step of allocating a resource necessary for application execution is merely carried out in the background, a less great load is placed on a CPU. Therefore, the application which is being executed in the foreground is hardly likely to be adversely affected.

Therefore, the configuration of the information processing device brings about effects of (i) allowing a user to sense that applications are changed at a higher speed and (ii) hardly adversely affecting an application which is being executed in the foreground.

### Industrial Applicability

The present invention is applicable to an information processing device capable of executing a plurality of applications, particularly to a portable information processing device such as a smartphone in which a display region for an application execution screen is limited and the number of application execution screens that can be displayed simultaneously is limited.

### Reference Signs List

- 1: CPU
- 2: Display section
- 3: Touch panel
- 4: Memory
- 5: Storage medium reading section
- 6: Operation key
- 7: Storage medium
- 8: Display control section
- 101: Application execution control section
- 102: Application execution processing section
- 102a: Foreground executing section
- 102b: Background executing section

## Claims

1. An information processing device comprising:
a display panel for displaying a screen showing an application which is being executed; and
an application execution processing section for carrying out an execution procedure with respect to an application which is selected by a user,
in a case where a procedure in which a process generation step of allocating a resource necessary for application execution is carried out and then an application execution screen is displayed in the display panel is an application execution procedure, the application execution processing section carrying out the process generation step in the background during application execution in the foreground.

2. The information processing device according to claim 1, wherein a process to be generated in the process generation step is shared by at least two types of applications which are associated with each other.

3. The information processing device according to claim 1 or 2, wherein the application execution processing section executes the process generation step at a timing at which a screen showing an application which is executed in the foreground is displayed in the display panel.

4. An information processing device according to any one of claims 1 through 3, further comprising:
an application execution control section for carrying out application execution control with respect to the application execution processing section,
the application execution control section prioritizing control procedures which are necessary for application execution, and
the application execution control section carrying out execution control with respect to each application by giving a lower priority to a control procedure which is necessary for the process generation step than to a control procedure which is necessary for processing of an application which is being executed in the foreground.

5. A method for carrying out application execution control with respect to an information processing device including: a display panel for displaying a screen showing an application which is being executed; and an application execution processing section for carrying out an execution procedure with respect to an application which is selected by a user,
said method comprising an application execution control step of:
in a case where a procedure in which a process generation step of allocating a resource necessary for application execution is carried out and then an application execution screen is displayed in the display panel is an application execution procedure,
carrying out the process generation step in the background during application execution in the foreground.

6. A program for causing a computer to execute the application execution control step included in the method recited in claim 5.

7. A computer-readable recording medium in which the program recited in claim 6 is recorded.
